(19) Europäisches Patentamt / European Patent Office / Office européen des brevets

(11) **EP 1 570 253 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: 03748081.1

(22) Anmeldetag: **24.09.2003**

(51) Int Cl.:
*G01N 15/06* (2006.01)   *G01N 21/85* (2006.01)

(86) Internationale Anmeldenummer:
**PCT/EP2003/010617**

(87) Internationale Veröffentlichungsnummer:
**WO 2004/053467 (24.06.2004 Gazette 2004/26)**

(54) **OPTISCHER SENSOR ZUR BESTIMMUNG DER KONZENTRATIONEN VON FARBSTOFFEN UND/ODER PARTIKELN IN FLÜSSIGEN ODER GASFÖRMIGEN MEDIEN UND VERFAHREN ZU DESSEN BETRIEB**

OPTICAL SENSOR FOR DETERMINING THE CONCENTRATIONS OF DYES AND/OR PARTICLES IN LIQUID OR GASEOUS MEDIA AND METHOD FOR OPERATING THE SAME

CAPTEUR OPTIQUE POUR DETERMINER LES CONCENTRATIONS EN COLORANTS ET/OU EN PARTICULES DANS DES MILIEUX LIQUIDES OU GAZEUX ET PROCEDE D'EXPLOITATION CORRESPONDANT

(84) Benannte Vertragsstaaten:
**DE IT TR**

(30) Priorität: **11.12.2002 DE 10257716**

(43) Veröffentlichungstag der Anmeldung:
**07.09.2005 Patentblatt 2005/36**

(73) Patentinhaber: **Deutsche Institute für Textil- und Faserforschung Denkendorf**
**73770 Denkendorf (DE)**

(72) Erfinder: **SCHNEIDER, Reinhold**
**70597 Stuttgart (DE)**

(74) Vertreter: **Ruckh, Rainer Gerhard**
**Jurastrasse 1**
**73087 Bad Boll (DE)**

(56) Entgegenhaltungen:
| | |
|---|---|
| WO-A-99/36772 | WO-A1-01/14873 |
| US-A- 3 319 514 | US-A- 3 850 529 |
| US-A- 3 890 510 | US-A- 3 892 485 |
| US-A- 4 699 509 | US-A- 5 009 064 |
| US-A- 5 230 863 | US-A- 5 287 168 |
| US-A- 5 402 242 | US-A- 5 712 710 |

- PATENT ABSTRACTS OF JAPAN Bd. 0133, Nr. 58 (P-916), 10. August 1989 (1989-08-10) & JP 1 119741 A (NIPPON SOKEN INC), 11. Mai 1989 (1989-05-11)
- SENSEAIR: "Theory of calibration for SenseAir IR gas sensors" TECHNICAL NOTE TN-010, Juli 2000 (2000-07), Seiten 1-3, XP002284135
- PATENT ABSTRACTS OF JAPAN Bd. 0121, Nr. 00 (P-683), 2. April 1988 (1988-04-02) & JP 62 232540 A (NIPPON KOKAN KK <NKK>), 13. Oktober 1987 (1987-10-13)

**Beschreibung**

Die Erfindung betrifft einen optischen Sensor zur Bestimmung der Konzentrationen von Farbstoffen und / oder Partikeln in flüssigen oder gasförmigen Medien sowie ein Verfahren zu dessen Betrieb.

Die Bestimmung derartiger Farbstoff- oder Partikelkonzentrationen in gasförmigen oder flüssigen Medien stellt ein in unterschiedlichen Industriezweigen auftretendes Problem dar.

Insbesondere stellt die Bestimmung von Farbstoffkonzentrationen in flüssigen Medien ein wesentliches Element in der Abwasserkontrolle dar. Zudem stellt diese einen wesentlichen Parameter bei der Kontrolle und Steuerung von Spülprozessen, insbesondere bei dem Waschen von gefärbten und bedruckten Textilien dar. Bei derartigen Waschvorgängen besteht eine wesentliche Aufgabe darin, die Dauer des Waschvorganges und damit letztlich auch den Wasserverbrauch möglichst gering zu halten. Ein Ansatz zur Optimierung derartiger Waschvorgänge besteht darin, die Spülprozesse beim Waschen von Textilien in Abhängigkeit der aktuellen Farbstoffkonzentrationen im Spülwasser zu steuern. Der Spülprozess wird dabei dann beendet, wenn die Farbstoffkonzentration im Spülwasser einen bestimmten Grenzwert erreicht. Dadurch können unnötig lange Spülprozesse vermieden werden, wodurch der Wasserverbrauch reduziert und die Dauer des Waschvorgangs erheblich verkürzt werden kann. Voraussetzung hierfür ist, dass während der Spülprozesse die Farbstoffkonzentration im Spülwasser fortlaufend kontrolliert werden kann.

Ein bekanntes Verfahren zur Bestimmung von Farbstoffkonzentrationen in flüssigen Medien stellt die ECSD-Messtechnik dar, bei welcher eine elektrochemische Bestimmung des chemischen Sauerstoffbedarfs des flüssigen Mediums durchgeführt wird, der als Kenngröße für die Farbstoffkonzentration herangezogen wird.

Nachteilig hierbei ist, dass die Messzeiten zur Bestimmung des chemischen Sauerstoffbedarfs in der Größenordnung von einigen Minuten liegen. Aufgrund dieser hohen Reaktionszeit bei der Ermittlung von Messwerten ist diese Methode nur bedingt geeignet um Spülvorgänge beim Waschen von Textilien zu kontrollieren.

Prinzipiell können auch optische Messgeräte wie Spektralfotometer zur Bestimmung von Farbstoffkonzentrationen eingesetzt werden. Nachteilig bei derartigen Messgeräten ist jedoch der hohe apparative Aufwand. Zudem ist nachteilig, dass zur Bestimmung der Farbstoffkonzentration im Spülwasser mittels Pumpen Proben des Spülwassers Durchflussküvetten zugeführt werden müssen, in welchen dann die Bestimmung der Farbstoffkonzentration erfolgt. Abgesehen von dem hierfür notwendigen hohen apparativen Aufwand ist hierbei nachteilig, dass aufgrund des Zeitaufwandes für das Einleiten der Spülwasserproben mittels der Pumpen in die Durchflussküvetten nur eine zeitlich verzögerte Bestimmung der Farbstoffkonzentration im Spülwasser erfolgen kann. Dies führt zu einer unerwünscht hohen Ansprechzeit bei der Steuerung des Spülvorganges.

Die WO 01/14873 A1 betrifft ein Gasdetektorsystem, was dazu dient, in einem Raum entstehende gefahrbringende Dämpfe oder Gase zu detektieren. Um den jeweiligen Raum komplett zu überwachen, sind die Gassensoren räumlich verteilt an verschiedenen Orten angebracht. Die Sensoren sind über ein Bussystem miteinander verbunden.

Die US 4,699,509 A betrifft eine Messvorrichtung zur Ermittlung von Verunreinigungen in Schmiermitteln. Die Messvorrichtung weist eine Lichtquelle und einen Lichtempfänger auf, die durch einen Abstandsring auf eine Distanz von etwa 0,34 mm gehalten sind. In diesen Zwischenraum wird das zu untersuchende Schmiermittel eingebracht. Die Detektion der Verunreinigungen erfolgt mittels einer Absorptionsmessung.

In der JP 01 119741 A ist eine Messvorrichtung zur Bestimmung von Verunreinigungen in Schmieröl beschrieben, die eine Lichtquelle und einen Lichtempfänger aufweist, die in variierenden Abständen zueinander angeordnet sind. In den Zwischenraum zwischen Lichtsender und Lichtempfänger wird das Schmieröl zur Durchführung von Absorptionsmessungen eingebracht.

Die US 3,890,510 betrifft eine Messanordnung zur Bestimmung der Durchsichtigkeit einer Farbstoffflüssigkeit. Beidseits eines die Farbstoffflüssigkeit führenden Kanals sind ein Lichtsender und ein Lichtempfänger angeordnet.

In SENSEAIR: "Theory of calibration for SenseAir IR gas sensors" Technical Note TN-010, Juli 2000 (2000-07), Seiten 1 - 3, XP002284135, ist eine Methode zur Kalibrierung eines Infrarot-Gassensors beschrieben. Mit dem mit monochromatischem Licht arbeitenden Gassensor werden Absorptionsmessungen durchgeführt. Zur Kalibrierung wird eine Referenzabsorptionsmessung mit einem bekannten Gas durchgeführt.

Eine entsprechende Methode ist in der US 5,402,242 A beschrieben.

Der Erfindung liegt die Aufgabe zugrunde, eine Einrichtung und ein Verfahren bereitzustellen, mittels derer bei geringem apparativem Aufwand eine schnelle und präzise Ermittlung von Partikel- und Farbstoffkonzentrationen in flüssigen oder gasförmigen Medien ermöglicht wird.

Zur Lösung dieser Aufgabe sind die Merkmale der Ansprüche 1 und 19 vorgesehen. Vorteilhafte Ausführungsformen und zweckmäßige Weiterbildungen sind in den Unteransprüchen beschrieben.

Der erfindungsgemäße optische Sensor dient zur Bestimmung der Konzentrationen von Farbstoffen und / oder Partikeln in flüssigen oder gasförmigen Medien und umfasst mehrere an eine gemeinsame Auswerteeinheit angeschlossenen Messköpfen. Jeder Messkopf besteht aus einer Sendereinheit mit wenigstens einem sichtbaren Sendelichtstrahlen emittierenden Halbleiter-Sendeelement und einer Empfängereinheit mit wenigstens einem Halbleiter-Empfangselement, auf welches ein eine Absorptionsstrecke mit flüssigem oder gasförmigem Medium durchsetzender Teil der Sendelichtstrahlen geführt ist. Das Halbleiter-Sendeelement emittiert Sendelichtstrahlen im Wellenlängenbereich von 400 nm bis 700 nm, wobei dessen spektrale Bandbreite kleiner als 100 nm ist. Die Messköpfe sind über elektrische Zuleitungen an die Auswerteeinheit gekoppelt. Die am Ausgang des Halbleiter-Empfangselements anstehenden Empfangssignale können zur Ermittlung der Farbstoffkonzentration bzw. Partikelkonzentration ausgewertet werden.

Der erfindungsgemäße optische Sensor weist einen einfachen modularen Aufbau auf und ist damit kostengünstig herstellbar. Der Messkopf des optischen Sensors weist eine kleine Baugröße auf und ist somit einfach an einer Messstelle positionierbar und flexibel einsetzbar. Weiterhin zeichnet sich der optische Sensor durch einen robusten Aufbau auf, wobei dieser nahezu wartungsfrei ist. Ein wesentlicher Vorteil des optischen Sensors besteht darin, dass der Messkopf des optischen Sensors als Tauchsensormodul einsetzbar ist. Die im Messkopf vorgesehenen optisch aktiven Sensorelemente sind dabei als Halbleiterbauelemente ausgebildet, wodurch der Messkopf eine kleine Baugröße aufweist und auf einfache Weise im flüssigen oder gasförmigen Medium derart platzierbar ist, dass zwischen dem Halbleiter-Sendeelement und dem Halbleiter-Empfangselement eine definierte Absorptionsstrecke mit dem zu verwendenden flüssigen oder gasförmigen Medium liegt.

Um eine Beschädigung des Messkopfes bei Eintauchen insbesondere in das flüssige Medium zu verhindern, sind die Sendereinheit mit dem Halbleiter-Sendeelement und die Empfängereinheit mit dem Halbleiter-Empfangselement flüssigkeitsdicht gekapselt.

Die Bestimmung der Partikel- bzw. Farbstoffkonzentration im flüssigen oder gasförmigen Medium erfolgt mittels einer Absorptionsmessung, wobei die Länge der Absorptionsstrecke durch Fixierung der Sendereinheit und der Empfängereinheit an einer Halterung exakt vorgebbar ist.

Mit dem so ausgebildeten optischen Sensor kann in dem flüssigen oder gasförmigen Medium selbst die Bestimmung der Partikel- bzw. Farbstoffkonzentration fortlaufend und nahezu ohne Verzögerungszeit erfolgen.

Damit können die von dem optischen Sensor generierten Sensorsignale insbesondere für eine schnelle und präzise Steuerung von Spülprozessen in einem Spülbecken, in welchem gefärbte Textilien gewaschen werden, eingesetzt werden.

Besonders vorteilhaft ist hierbei, dass nur der Messkopf des optischen Sensors in das flüssige Medium eingetaucht wird. Die Auswerteeinheit zur Auswertung der Sensorsignale befindet sich außerhalb des Spülbeckens und ist mittels elektrischer Zuleitungen an den Messkopf angeschlossen.

Infolge des modularen Aufbaus des optischen Sensors kann dieser in einfacher Weise dahingehend erweitert werden, dass mehrere Messköpfe an die Auswerteeinheit angeschlossen werden. Damit kann mit dem optischen Sensor insbesondere die Farbstoffkonzentration von flüssigen Medien in mehreren Becken simultan erfasst werden. Dementsprechend kann mittels der Sensorsignale eines optischen Sensors eine Steuerung von Spülprozessen in mehreren Spülbecken erfolgen.

Aufgrund des modularen Aufbaus des optischen Sensors können die Messköpfe auch an Küvetten, insbesondere Durchflussküvetten montiert sein, so dass auch die Farbstoffkonzentration oder gegebenenfalls Partikelkonzentration in flüssigen oder gasförmigen Medien in derartigen Küvetten bestimmt werden können.

Erfindungsgemäß beruht die Bestimmung der Partikel- bzw. Farbstoffkonzentrationen in einem flüssigen oder gasförmigen Medium auf einer Absorptionsmessung, wobei als Sensorsignale die Empfangssignale des Halbleiter-Empfangselements ausgewertet werden, auf welchen der die Absorptionsstrecke durchsetzende Teil der Sendelichtstrahlen auftrifft. Die Bestimmung der Farbstoffkonzentration des flüssigen oder gasförmigen Mediums erfolgt anhand des Lambert-Beer'schen Gesetzes.

Gemäß dem Lambert-Beer'schen Gesetz ist die Schwächung der Sendelichtstrahlen bei Durchgang durch die Absorptionsstrecke mit dem flüssigen oder gasförmigen Medium durch einen Extinktionswert definiert, welcher vom Produkt der Schichtdicke der Absorptionsstrecke und einem Extinktionskoeffizienten, der abhängig von der Wellenlänge der Sendelichtstrahlen und von den im flüssigen oder gasförmigen Medium enthaltenen Farbstoffen bzw. Partikeln ist, gebildet ist.

Dementsprechend ist die mit einem optischen Sensor durchgeführte Absorptionsmessung abhängig von den Sensorparametern, wie insbesondere der Wellenlänge der Sendelichtstrahlen.

Zur Eliminierung der Abhängigkeit der Absorptionsmessung von sensorspezifischen Parametern wird daher vor der Durchführung der Messungen ein Kalibrierungsvorgang durchgeführt, bei welchem mittels des optischen Sensors das flüssige oder gasförmige Medium mit vorgegebenen, bekannten Partikel- oder Farbstoffkonzentrationen vermessen wird. Daraus wird ein sensorspezifischer Extinktionswert ermittelt, auf welchen die bei den nachfolgenden Messungen ermittelten Messergebnisse bezogen werden.

Damit sind die Messergebnisse unabhängig von den Eigenschaften des optischen Sensors. Dabei ist insbesondere vorteilhaft, dass durch die Eliminierung der Wellenlängenabhängigkeit der Messergebnisse auch mit optischen Sensoren gearbeitet werden kann, die kein monochromatisches Licht aussenden.

Voraussetzung für eine präzise Bestimmung der Partikel- bzw. Farbstoffkonzentration im flüssigen oder gasförmigen Medium ist lediglich, dass der Wellenlängenbereich der Sendelichtstrahlen innerhalb des Farbspektrums des jeweils zu ermittelnden Farbstoffes liegt.

Erfindungsgemäß wird ein Halbleiter-Sendeelement eingesetzt, welches sichtbare Sendelichtstrahlen im Wellenlängenbereich von 400 - 700 nm emittieren, wobei die spektrale Bandbreite der Sendelichtstrahlen bevorzugt kleiner als 100 nm ist.

Besonders vorteilhaft werden Halbleiter-Sendeelemente eingesetzt, die Sendelichtstrahlen im Wellenlängenbereich von etwa 470 nm emittieren. Mit dieser Ausführungsform des optischen Sensors kann ein breites Spektrum verschiedenartiger Farbstoffe erfasst werden, da diese in dem genannten Wellenlängenbereich lichtabsorbierend sind.

Eine besonders vorteilhafte Verwendung des erfindungsgemäßen optischen Sensors besteht darin, dass dieser zur Bestimmung des Rußgehalts und / oder Metallabriebs in Motorölen von Kraftfahrzeugen und dergleichen eingesetzt werden kann. Weiterhin kann der erfindungsgemäße optische Sensor zur Bestimmung von Partikelkonzentrationen in Abluft und damit im Bereich des Emissionsschutzes eingesetzt werden. Schließlich kann der optische Sensor zur Bestimmung von Verunreinigungen in Abwässern eingesetzt werden.

Eine weitere erfindungsgemäße Verwendung des optischen Sensors besteht in der Bestimmung von Verunreinigungen in Abgasen von Kraftfahrzeugen.

Weiterhin kann der erfindungsgemäße optische Sensor zur Qualitätskontrolle in industriellen Prozessen eingesetzt werden. Beispiele hierfür sind die Kontrolle von Pigment- oder Partikelkonzentrationen von Lacken sowie die Kontrolle der Farbstoffkonzentrationen in Färbebäder, welche beispielsweise zum Färben von Textilien eingesetzt werden.

Die Erfindung wird im Nachstehenden anhand der Zeichnung erläutert. Es zeigt

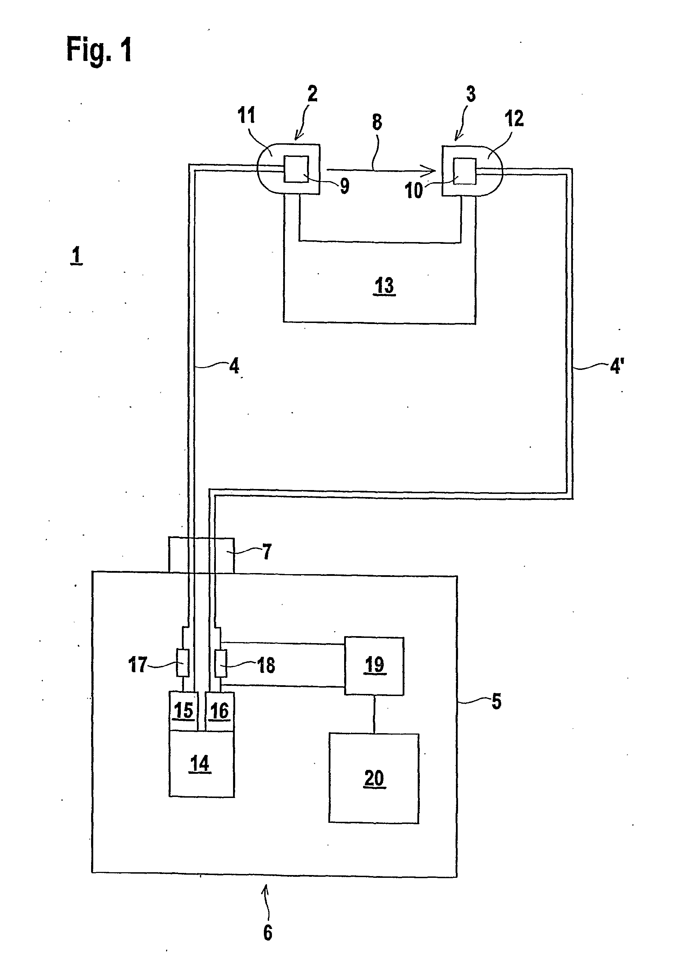

Fig. 1   Schematische Darstellung eines Ausführungsbeispiels des optischen Sensors zur Bestimmung von Farbstoffkonzentrationen in flüssigen Medien.

Figur 1 zeigt ein Ausführungsbeispiel eines optischen Sensors 1 zur Bestimmung von Farbstoffkonzentrationen in flüssigen Medien. Generell kann der optische Sensor auch zur Bestimmung von Partikelkonzentrationen eingesetzt werden. Weiterhin kann der optische Sensor zur Bestimmung von Farbstoff- oder Partikelkonzentrationen in gasförmigen Medien eingesetzt werden. Der optische Sensor 1 weist einen Messkopf mit einer Sendereinheit 2 und einer Empfängereinheit 3 auf, welche über Zuleitungen 4, 4' an eine in einem Gehäuse 5 integrierte Auswerteeinheit 6 angeschlossen sind.

Zum Anschluss des Messkopfes ist an der Auswerteeinheit 6 ein Stecker 7 vorgesehen. Prinzipiell können auch mehrere, vorzugsweise identische Messköpfe über separate Stecker 7 an die Auswerteeinheit 6 angeschlossen werden.

Die Sendereinheit 2 weist ein Sendelichtstrahlen 8 emittierendes Halbleiter-Sendeelement 9 auf Die Empfängereinheit 3 weist ein Halbleiter-Empfangselement 10 zum Empfang der Sendelichtstrahlen 8 auf. Das Halbleiter-Sendeelement 9 emittiert sichtbare Sendelichtstrahlen 8 im Wellenlängenbereich von 400 - 700 nm, wobei die spektrale Bandbreite der Sendelichtstrahlen 8 kleiner als 100 nm ist. Dabei kann das Halbleiter-Sendeelement 9 von einer Leuchtdiode oder einer Laserdiode gebildet sein. Im vorliegenden Fall besteht das Halbleiter-Sendeelement 9 aus einer GaN-Leuchtdiode, die eine maximale Strahlungsleistung bei einer Wellenlänge von 470 nm aufweist.

Das Halbleiter-Empfangselement 10 besteht aus einem Fototransistor, einer Fotodiode oder einem Fotowiderstand. Die spektrale Empfindlichkeit des Halbleiter-Empfangselements 10 ist an die Wellenlänge der Sendelichtstrahlen 8 angepasst. Die fotoempfindliche Schicht des Halbleiter-Empfangselements 10 besteht bevorzugt aus Cadmiumselenid, Cadmiumsulfid oder Mischungen hiervon.

Im vorliegenden Fall weist die Sendereinheit 2 und die Empfängereinheit 3 jeweils eine lichtdurchlässige und flüssigkeitsdichte Kapselung 11, 12 zur Aufnahme des Halbleiter-Sendeelements 9 bzw. des Halbleiter-Empfangselements 10 auf. Die Kapselung 11, 12 besteht beispielsweise aus Epoxidharzen oder Polymethacrylaten. Prinzipiell können die Kapselungen 11, 12 auch aus Glas, Teflon oder Polyolefinen bestehen.

In der Sendereinheit 2 kann zur Strahlformung der Sendelichtstrahlen 8 prinzipiell eine Sendeoptik oder eine spaltformige Blende vorgesehen sein. Zudem kann dem Halbleiter-Sendeelement 9 ein Monochromator zur Erzeugung monochromatischer Sendelichtstrahlen 8 nachgeordnet sein.

Zur Bestimmung der Farbstoffkonzentration eines flüssigen Mediums wird mit dem optischen Sensor 1 eine Absorptionsmessung durchgeführt. Dabei befindet sich das flüssige Medium innerhalb einer Absorptionsstrecke, welche von den Sendelichtstrahlen 8 durchsetzt wird. Der nicht absorbierte Teil der Sendelichtstrahlen 8 trifft dabei auf das Halbleiter-Empfangselement 10 und generiert an dessen Ausgang Empfangssignale, die in der Auswerteeinheit 6 ausgewertet werden.

Die Absorptionsstrecke kann prinzipiell von einer Küvette mit transparenten Wänden, insbesondere von einer Durchflussküvette gebildet sein. Die Sendereinheit 2 und die Empfängereinheit 3 werden dann an den Außenwänden der Küvette fixiert.

Im vorliegenden Fall ist der Messkopf als Tauchsensormodul ausgebildet, so dass dieser in Spülbecken und dergleichen eintauchbar ist um dort direkt die Farbstoffkonzentration des flüssigen Mediums zu erfassen. Der so ausgebildete optische Sensor kann insbesondere auch zur Bestimmung von Partikelkonzentrationen in Motorölen bzw. in Abgasen von Kraftfahrzeugen eingesetzt werden.

Dabei sind die Sendereinheit 2 und die Empfängereinheit 3 an einer Halterung 13 fixiert, so dass zwischen diesen ein Messspalt vorgegebener Breite entsteht, welcher die Absorptionsstrecke definiert. Vorzugsweise sind die Positionen der Sender- und Empfängereinheit 3 an der Halterung 13 einstellbar.

Die Auswerteeinheit 6 dient zur Ansteuerung des Halbleiter-Sendeelements 9 sowie zur Auswertung der am Ausgang des Halbleiter-Empfangselements 10 anstehenden Empfangssignale. Zur Stromversorgung des optischen Sensors 1 ist in der Auswerteeinheit 6 ein Netzteil 14 vorgesehen. Das Halbleiter-Sendeelement 9 und Halbleiter-Empfangselement 10 werden jeweils mit einer stabilisierten konstanten Gleichspannung gespeist. Hierzu sind jeweils ein Spannungsstabilisator 15, 16 und ein Vorwiderstand 17, 18 als Anschaltung für das Halbleiter-Sendeelement 9 bzw. das Halbleiter-Empfangselement 10 vorgesehen. Zur Vermeidung von Temperaturdriften der Empfangssignale kann in dem Stromkreis des Halbleiter-Empfangselements 10 zudem ein Heißleiterbauelement wie zum Beispiel ein NTC-Widerstand integriert sein. Ebenso können mit einem derartigen Heißleiterbauelement Temperaturdriften der Sendesignale des Halbleiter-Sendeelements 9 kompensiert werden. Alternativ oder zusätzlich kann zur Kompensation der Temperaturdriften der genannten Bauelemente auch ein geeignetes Software-Modul in der Auswerteeinheit 6 vorgesehen sein.

Die Auswerteeinheit 6 weist weiterhin einen Analog-/Digitalwandler 19 sowie eine diesem nachgeordnete Rechnereinheit 20 auf. Die analogen Empfangssignale werden im Analog-/Digital-Wandler 19 digitalisiert und dann in die Rechnereinheit 20 eingelesen. Dort erfolgt anhand der eingelesenen Empfangssignale die Bestimmung der Farbstoffkonzentration des flüssigen Mediums.

Zudem kann die Auswerteeinheit 6 eine nicht dargestellte analoge oder digitale Anzeigeeinheit zur Anzeige der aktuellen Empfangssignale aufweisen.

Die Auswertung der Empfangssignale, die als Strom- oder Spannungssignale zur Verfügung gestellt werden können, erfolgt gemäß dem Lambert-Beer'schen Gesetz.

Vor der Betriebsphase des optischen Sensors 1 erfolgt dabei eine Kalibrierung des optischen Sensors 1. Dieser Kalibriervorgang erfolgt mittels Referenzmessungen, bei welchen in der Absorptionsstrecke jeweils ein flüssiges Medium mit einer bekannten, vorgegebenen Farbstoffkonzentration des zu bestimmenden Farbstoffes angeordnet ist.

Im vorliegenden Fall werden während des Kalibriervorganges zwei Referenzmessungen durchgeführt. Bei der ersten Referenzmessung befindet sich farbstofffreies flüssiges Medium in der Absorptionsstrecke. Die bei dieser ersten Referenzmessung ermittelten Empfangssignale $I_o$ werden in der Auswerteeinheit 6 abgespeichert. Bei der zweiten Referenzmessung befindet sich in dem flüssigen Medium eine vorgegebene Farbstoffkonzentration $C_{kal}$ des zu bestimmenden Farbstoffes. Typischerweise liegt diese Farbstoffkonzentration im Bereich von 0,5 - 1 g/l. Die bei dieser zweiten Referenzmessung ermittelten Empfangssignale I werden ebenfalls in der Auswerteeinheit 6 abgespeichert.

Aus diesen beiden Messgrößen wird in der Auswerteeinheit 6 gemäß der nachfolgenden Beziehung ein sensor- und farbstoffspezifischer Referenz-Extinktionswert $E_{kal}$ berechnet:

$$E_{kal} = \lg (I_o / I) = \varepsilon' d\, C_{kal}$$

Wie aus der obigen Gleichung ersichtlich, ist der Referenz-Extinktionswert $E_{kal}$ durch das Produkt eines fiktiven molaren Extinktionskoeffizienten $\varepsilon'$, der Schichtdicke d der Absorptionsstrecke, d.h. der Breite des Messspalts zwischen Sendereinheit 2 und Empfängereinheit 3, sowie der vorgegebenen Farbstoffkonzentration $C_{kal}$ bei der zweiten Referenzmessung definiert.

Der fiktive molare Extinktionskoeffizient $\varepsilon'$ ist durch das Produkt

$$\varepsilon' = \varepsilon \cdot f$$

definiert. Dabei bildet s den molaren, wellenlängenabhängigen Extinktionskoeffizienten und f einen Korrekturfaktor, der von der Beschaffenheit des optischen Sensors 1 abhängig ist.

In der auf den Kalibriervorgang folgenden Betriebsphase wird die Farbstoffkonzentration des Farbstoffes, auf welchen die Kalibrierung erfolgte, in dem zu untersuchenden flüssigen Medium durch weitere Absorptionsmessungen mit dem optischen Sensor bestimmt.

Die dabei erhaltenen, die aktuellen Messwerte bildenden Empfangssignale $I_{mess}$ werden dabei gemäß der folgenden Beziehung auf die erste Referenzmessung bezogen

$$E_{mess} = \lg (I_o / I_{mess}) = K\, C_x$$

Durch diese Referenzierung wird als aktuelle Messgröße der Extinktionswert $E_{mess}$ erhalten, der ein Maß für die zu bestimmende Farbstoffkonzentration $C_x$ bildet.

Der Proportionalitätsfaktor K ist durch die Beziehung

$$K = \varepsilon' \cdot d$$

definiert.

Die Bestimmung der Farbstoffkonzentration $C_x$ ergibt sich nach Umformen der Gleichungen für $E_{kal}$ und $E_{mess}$ durch folgende Beziehung

$$C_x = (E_{mess} / E_{kal}) C_{kal}$$

$$= [(\lg I_o - \lg I_{mess}) / (\lg I_o - \lg I)] C_{kal}$$

Wie aus dieser Gleichung ersichtlich ist die zu bestimmende Farbstoffkonzentration $C_x$ durch die Messwerte $I_o$, I und $I_{mess}$ sowie die vorgegebene Referenz-Farbstoffkonzentration $C_{kal}$ definiert. Die Bestimmung der Farbstoffkonzentration ist somit unabhängig von den sensorspezifischen Kenngrößen. Besonders vorteilhaft hierbei ist, dass zur Bestimmung der Farbstoffkonzentration $C_x$ kein monochromatisches Sendelicht eingesetzt werden muss.

Die nachfolgende Tabelle zeigt typische Messergebnisse mit dem erfindungsgemäßen optischen Sensor 1 zur Bestimmung verschiedener Farbstoffkonzentrationen in Wasser als flüssigem Medium.

Tabelle 1

| Farbstoff | Vorgelegte Farbstoffkonzentration [g/l] | Empfangssignal [V] | Aus Messsignal errechnete Farbstoffkonzentration [g/l] | Abweichung [g/l] |
|---|---|---|---|---|
| Wasser | 0 | 2,380 | 0 | 0 |
| Remazol Tiefschwarz N | 0,1 | 1,850 | 0,093 | 0,007 |
| | 0,25 | 1,254 | 0,237 | 0,013 |
| | 0,5 | 0,568 | 0,50 | 0,000 |
| | 1,0 | 0,138 *) | 1,00 | 0,000 |
| Remazol Brilliant Blau R | 0,1 | 2,308 | 0,120 | 0,020 |
| | 0,25 | 2,226 | 0,267 | 0,017 |
| | 0,5 | 2,101 *) | 0,500 | 0,000 |
| | 1,0 | 1,880 | 0,947 | 0,053 |
| Remazol Brilliant Rot F3B | 0,1 | 2,100 | 0,106 | 0,006 |
| | 0,25 | 1,764 | 0,254 | 0,004 |
| | 0,5 | 1,398 | 0,470 | 0,030 |
| | 1,0 | 0,731 *) | 1,000 | 0,000 |
| Remazol Gelb GR | 0,1 | 2,000 | 0,120 | 0,020 |
| | 0,25 | 1,600 | 0,307 | 0,057 |
| | 0,5 | 1,213 | 0,520 | 0,020 |
| | 1,0 | 0,657 *) | 1,000 | 0,000 |

Wie aus der Tabelle ersichtlich, wurden für vier verschiedene Farbstoffe unterschiedliche Farbstoffkonzentrationen ermittelt. In der linken Spalte der Tabelle ist jeweils die vorgegebene Farbstoffkonzentration aufgetragen. Zum Vergleich sind jeweils die aus den in Form von Spannungssignalen vorliegenden gewonnenen Empfangssignalen berechneten Farbstoffkonzentrationen aufgetragen. Die für die zweiten Referenzmessungen vorgegebenen Referenz-Farbstoffkonzentrationen sind in der Tabelle jeweils mit *) gekennzeichnet.

Wie aus der Tabelle ersichtlich, ist für einen großen Bereich von Konzentrationen und für eine Vielzahl unterschiedlicher Farbstoffe eine genaue Bestimmung von Farbstoffkonzentrationen im flüssigen Medium gegeben. Besonders vorteilhaft hierbei ist, dass sämtliche Messungen mit demselben optischen Sensor 1 durchgeführt werden können, der Sendelichtstrahlen 8 im Wellenlängenbereich von 470 nm emittiert. Diese Wahl der Senderwellenlänge erweist sich als vorteilhaft, da eine große Anzahl von Farbstoffen in diesem Wellenlängenbereich stark lichtabsorbierend ist.

Je nach Dicke des Messspaltes des optischen Sensors 1 können dabei Farbstoffkonzentrationen bis etwa 1 g/l oder sogar darüber bestimmt werden.

Ein weiterer wesentlicher Vorteil des optischen Sensors 1 besteht darin, dass mittels eines oder mehrerer Messköpfe in einem oder in mehreren Becken vor Ort unter Echtzeitbedingungen die Farbstoffkonzentrationen im jeweiligen flüssigen Medium bestimmt werden können. Bei einem optischen Sensor 1 mit mehreren Messköpfen kann simultan an mehreren Messstellen die Farbstoffkonzentration in flüssigen Medien bestimmt werden, wobei die Auswertung der Messsignale in der Auswerteeinheit 6 erfolgt. Der optische Sensor 1 bietet somit eine besonders flexible und kostengünstige Möglichkeit zur Bestimmung der Farbstoffkonzentrationen.

Bei der Ausbildung des Messkopfes als Tauchsensormodul kann mit diesem im Becken vor Ort und nahezu ohne Verzögerungszeit die Farbstoffkonzentration der jeweiligen flüssigen Medien erfolgen. Der optische Sensor 1 kann somit besonders vorteilhaft zu Steuerungs- und Regelungsaufgaben in der Abwasserkontrolle eingesetzt werden. Insbesondere ist der optische Sensor 1 vorteilhaft bei der Steuerung von Spülprozessen beim Waschen von gefärbten und bedruckten Textilien einsetzbar.

Bezugszeichenliste

| | |
|---|---|
| (1) | Optischer Sensor |
| (2) | Sendereinheit |
| (3) | Empfängereinheit |
| (4, 4') | Zuleitungen |
| (5) | Gehäuse |
| (6) | Auswerteeinheit |
| (7) | Stecker |
| (8) | Sendelichtstrahlen |
| (9) | Halbleiter-Sendeelement |
| (10) | Halbleiter-Empfangselement |
| (11) | Kapselung |
| (12) | Kapselung |
| (13) | Halterung |
| (14) | Netzteil |
| (15) | Spannungsstabilisator |
| (16) | Spannungsstabilisator |
| (17) | Vorwiderstand |
| (18) | Vorwiderstand |
| (19) | Analog-/Digital-Wandler |
| (20) | Rechnereinheit |

**Patentansprüche**

1. Optischer Sensor zur Bestimmung der Konzentrationen von Farbstoffen und / oder Partikeln in flüssigen oder gasförmigen Medien mit wenigstens einem Messkopf, bestehend aus einer Sendereinheit (2) mit wenigstens einem sichtbare Sendelichtstrahlen (8) emittierenden Halbleiter-Sendeelement (9) und einer Empfängereinheit (3) mit wenigstens einem Halbleiter-Empfangselement (10), auf welches ein eine Absorptionsstrecke mit flüssigem oder gasförmigem Medium durchsetzender Teil der Sendelichtstrahlen (8) geführt ist, wobei das Halbleiter-Sendeelement (9) Sendelichtstrahlen (8) im Wellenlängenbereich von 400 nm bis 700 nm emittiert und dessen spektrale Bandbreite kleiner als 100 nm ist, wobei die Messköpfe über elektrische Zuleitungen (4, 4') an die Auswerteeinheit (6) gekoppelt sind, in welcher die am Ausgang des Halbleiter-Empfangselements (10) anstehenden Empfangssignale zur Ermittlung der Farbstoffkonzentration bzw. Partikelkonzentration ausgewertet werden können, **dadurch gekennzeichnet,**

**dass** mehrere Messköpfe an eine gemeinsame Auswerteeinheit angeschlossen sind.

2. Optischer Sensor nach Anspruch 1, **dadurch gekennzeichnet, dass** jeder Messkopf als Tauchsensormodul ausgebildet ist, dessen Sendereinheit (2) und Empfängereinheit (3) flüssigkeitsdicht gekapselt sind.

3. Optischer Sensor nach Anspruch 2, **dadurch gekennzeichnet, dass** die Sendereinheit (2) und die Empfängereinheit (3) zumindest im Bereich der optisch aktiven Flächen des Halbleiter-Sendeelements (9) und des Halbleiter-Empfangselements (10) mit lichtdurchlässigen Materialien gekapselt sind.

4. Optischer Sensor nach Anspruch 3, **dadurch gekennzeichnet, dass** die lichtdurchlässigen Materialien von Epoxidharzen oder Polymethacrylaten, Glas, Teflon oder Polyolefinen gebildet sind.

5. Optischer Sensor nach einem der Ansprüche 2 bis 4, **dadurch gekennzeichnet, dass** die Sendereinheit (2) und die Empfängereinheit (3) zur Definition der Absorptionsstrecke an einer gemeinsamen Halterung (13) montiert sind.

6. Optischer Sensor nach Anspruch 5, **dadurch gekennzeichnet, dass** die Sendereinheit (2) und die Empfängereinheit (3) an der Halterung (13) positionsverstellbar gelagert sind.

7. Optischer Sensor nach Anspruch 1, **dadurch gekennzeichnet, dass** zur Ausbildung der Absorptionsstrecke eine ein flüssiges oder gasförmiges Medium aufnehmende Küvette vorgesehen ist, an deren Außenseiten die Sendereinheit (2) und die Empfängereinheit (3) angeordnet sind.

8. Optischer Sensor nach Anspruch 7, **dadurch gekennzeichnet, dass** die Küvette als Durchflussküvette ausgebildet ist.

9. Optischer Sensor nach einem der Ansprüche 1 bis 8, **dadurch gekennzeichnet, dass** das Halbleiter-Sendeelement (9) von einer Leuchtdiode oder einer Laserdiode gebildet ist.

10. Optischer Sensor nach einem der Ansprüche 1 bis 9, **dadurch gekennzeichnet, dass** das Halbleiter-Sendeelement (9) mit einer konstanten Gleichspannung gespeist ist.

11. Optischer Sensor nach einem der Ansprüche 1 bis 10, **dadurch gekennzeichnet, dass** das Halbleiter-Empfangselement (10) von einem Fototransistor, einer Fotodiode oder einem Fotowiderstand gebildet ist.

12. Optischer Sensor nach Anspruch 11, **dadurch gekennzeichnet, dass** das Halbleiter-Empfangselement (10) von einer konstanten Gleichspannung gespeist wird.

13. Optischer Sensor nach Anspruch 12, **dadurch gekennzeichnet, dass** zur Stabilisierung der Gleichspannung für das Halbleiter-Sendeelement (9) und Halbleiter-Empfangselement (10) jeweils ein Spannungsstabilisator (15, 16) und ein Vorwiderstand (17, 18) vorgesehen sind.

14. Optischer Sensor nach einem der Ansprüche 12 oder 13, **dadurch gekennzeichnet, dass** zur Temperaturkompensation der Empfangssignale dem Halbleiter-Empfangselement (10) und / oder zur Temperaturkompensation der Sendesignale dem Halbleiter-Sendeelement (9) ein Heißleiterbauelement zugeschaltet ist.

15. Optischer Sensor nach einem der Ansprüche 12 bis 14, **dadurch gekennzeichnet, dass** in der Auswerteeinheit (6) ein Software-Modul zur Temperaturkompensation der Empfangssignale vorgesehen ist.

16. Optischer Sensor nach einem der Ansprüche 1 bis 15, **dadurch gekennzeichnet, dass** die Auswerteeinheit (6) eine analoge oder digitale Anzeigeeinheit zur Anzeige der Empfangssignale aufweist.

17. Optischer Sensor nach einem der Ansprüche 1 bis 16, **dadurch gekennzeichnet, dass** die Auswerteeinheit (6) eine Rechnereinheit (20) aufweist, in welche die Empfangssignale über einen Analog/Digitalwandler (19) eingelesen werden.

18. Verfahren zum Betrieb eines optischen Sensors gemäß einem der Ansprüche 1 bis 17, **gekennzeichnet durch** folgende Verfahrensschritte:

Durchführen von Referenzmessungen zur Elimination der Wellenlängenabhängigkeit der Messergebnisse des optischen Sensors anhand von in der Absorptionsstrecke angeordneten Referenzmedien mit bekannten Farbstoffkonzentrationen oder Partikelkonzentrationen während eines Kalibrierungsvorganges zur Bestimmung eines sensor- und farbstoffspezifischen bzw. partikelspezifischen Referenz-Extinktionswertes $E_{kal}$,

nachfolgende Bestimmung von aktuellen Messgrößen bildenden Extinktionswerten $E_{mess}$ für in der Absorptionsstrecke angeordnete flüssige oder gasförmige Medien,

und anschließende Bestimmung der Farbstoffkonzentration oder Partikelkonzentration in dem jeweiligen flüssigen oder gasförmigen Medium **durch** Referenzierung des gemessenen Extinktionswertes $E_{mess}$ auf den Referenz-Extinktionswertes $E_{kal}$.

19. Verfahren nach Anspruch 18, **dadurch gekennzeichnet, dass** der Referenz-Extinktionswert gemäß der Beziehung $E_{kal} = \lg (I_o / I_{kal})$ gebildet wird, wobei $I_o$ und $I_{kal}$ die Empfangssignale des Halbleiter-Empfangselements (10) bei einem in der Absorptionsstrecke angeordneten farbstofffreiem bzw. partikelfreiem Referenz-Medium und dem Referenz-Medium mit einer vorgegebenen Farbstoffkonzentration bzw. Partikelkonzentration $C_{kal}$ des zu bestimmenden Farbstoffes bzw. der zu bestimmenden Partikel bilden.

20. Verfahren nach Anspruch 19, **dadurch gekennzeichnet, dass** der die aktuelle Messgröße bildende Extinktionswert $E_{mess}$ gemäß der Beziehung $E_{mess} = \lg (I_o / I_{mess})$ gebildet wird, wobei $I_{mess}$ das Empfangssignal des Halbleiter-Empfangselements (10) bei dem in der Absorptionsstrecke angeordneten flüssigen oder gasförmigen Medium mit der zu bestimmenden Farbstoffkonzentration $C_x$ des zu bestimmenden Farbstoffes bzw. der zu bestimmenden Partikel bildet.

21. Verfahren nach Anspruch 20, **dadurch gekennzeichnet, dass** die Bestimmung der Farbstoffkonzentration bzw. Partikelkonzentration $C_x$ gemäß der Beziehung $C_x = (E_{mess} / E_{kal})\, C_{kal}$ erfolgt.

22. Verwendung des optischen Sensors gemäß einem der Ansprüche 1 bis 18, zur Bestimmung des Rußgehalts und / oder Metallabriebs in Motorölen, zur Bestimmung von Verunreinigungen in Abgasen von Kraftfahrzeugen, zur Bestimmung von Partikelkonzentrationen in Abluft oder zur Bestimmung von Verunreinigungen in Abwässern.

## Claims

1. Optical sensor for determining the concentration of dyes and/or particles in liquid or gaseous media, with at least one measuring head, consisting of a transmitter unit (2) with at least one semiconductor transmitter element (9), which emits visible transmitted light beams (8), and a receiver unit (3) with at least one semiconductor receiving element (10), to which a part of the transmitted light beams (8), which penetrates an absorption path with a liquid or gaseous medium, is guided, wherein the semiconductor transmitter element (9) emits transmitted light beams (8) in the wavelength range of 400 nm to 700 nm and the spectral bandwidth of which is less than 100 nm, wherein the measuring heads are coupled by way of electric lines (4, 4') to the evaluating unit (6), in which the received signals present at the output of the semiconductor receiver element (10) can be evaluated for determination of the dye concentration or particle concentration, **characterised in that** a plurality of measuring heads is connected with a common evaluating unit.

2. Optical sensor according to claim 1, **characterised in that** each measuring head is constructed as an immersion sensor module, the transmitter unit (2) and receiver unit (3) of which are fluid-tightly encapsulated.

3. Optical sensor according to claim 2, **characterised in that** the transmitter unit (2) and the receiver unit (3) are encapsulated by light-permeable materials at least in the region of the optically active surfaces of the semiconductor transmitter element (9) and the semiconductor receiver element (10).

4. Optical sensor according to claim 3, **characterised in that** the light-permeable materials are formed by epoxy resins or polymethacrylates, glass, Teflon or polyolefines.

5. Optical sensor according to any one of claims 2 to 4, **characterised in that** the transmitter unit (2) and the receiver unit (3) are mounted on a common mount (13) for definition of the absorption path.

6. Optical sensor according to claim 5, **characterised in that** the transmitter unit (2) and receiver unit (3) are mounted on the mount (13) to be adjustable in position.

7. Optical sensor according to claim 1, **characterised in that** for formation of the absorption path a cuvette receiving a liquid or gaseous medium is provided, at the outer sides of which cuvette the transmitter unit (2) and receiver unit (3) are arranged.

8. Optical sensor according to claim 7, **characterised in that** the cuvette is constructed as a throughflow cuvette.

9. Optical sensor according to any one of claims 1 to 8, **characterised in that** the semiconductor transmitter element (9) is formed by a light-emitting diode or a laser diode.

10. Optical sensor according to any one of claims 1 to 9, **characterised in that** the semiconductor transmitter element (9) is supplied with a constant direct voltage.

11. Optical sensor according to any one of claims 1 to 10, **characterised in that** the semiconductor receiver element 910) is formed by a phototransistor, a photodiode or a photoresistor.

12. Optical sensor according to claim 11, **characterised in that** the semiconductor receiver element (10) is supplied from a constant direct voltage.

13. Optical sensor according to claim 12, **characterised in that** for stabilisation of the direct voltage for the semiconductor transmitter element (9) and semiconductor receiver element (10) a respective voltage stabiliser (15, 16) and respective protective resistor (17, 18) are provided.

14. Optical sensor according to one of claims 12 and 13, **characterised in that** for temperature compensation of the received signals a thermistor is connected with the semiconductor receiver element (10) and/or for temperature compensation of the transmitted signals a thermistor is connected with the semiconductor transmitter element (9).

15. Optical sensor according to any one of claims 12 to 14, **characterised in that** a software module for temperature compensation of the received signals is provided in the evaluating unit (6).

16. Optical sensor according to any one of claims 1 to 15, **characterised in that** the evaluating unit (6) comprise an analog or digital display unit for display of the received signals.

17. Optical sensor according to any one of claims 1 to 16, **characterised in that** the evaluating unit (6) comprises a computer unit (12) into which the received signals are read by way of an analog-to-digital converter (19).

18. Method of operating an optical sensor according to any one of claims 1 to 17, **characterised by** the following method steps:

carrying out reference measurements for elimination of the wavelength dependence of the measurement results of the optical sensor by way of reference media, which are arranged in the absorption path, with known dye concentrations or particle concentrations during a calibration process for determination of a sensor-specific and dye-specific or particle-specific reference extinction value $E_{kal}$,
subsequent determination of extinction values $E_{mess}$, which form current measurement values, for liquid or gaseous media arranged in the absorption path,
and subsequent determination of the dye concentration or particle concentration in the respective liquid or gaseous medium by referencing the measured extinction value $E_{mess}$ against the reference extinction value $E_{kal}$.

19. Method according to claim 18, **characterised in that** the reference extinction value is determined in accordance with the equation $E_{kal} = 1g (I_0 / I_{kal})$, wherein $I_0$ and $I_{kal}$ form the received signals of the semiconductor receiver element (10) in the case of a dye-free or particle-free reference medium arranged in the absorption path and in the case of the reference medium with a predetermined dye concentration or particle concentration $C_{kal}$ of the dye to be ascertained or particle to be ascertained.

20. Method according to claim 19, **characterised in that** the extinction value $E_{mess}$ forming the current measurement magnitude is formed in accordance with the equation $E_{mess} = 1g (I_0/I_{mess})$, wherein $I_{mess}$ forms the received signal of the semiconductor receiver element (10) in the case of the liquid or gaseous medium, which is arranged in the absorption path, with the dye concentration $C_x$, which is to be determined, of the dye to be ascertained or the particle to be ascertained.

**21.** Method according to claim 20, **characterised in that** the determination of the dye concentration or particle concentration $C_x$ is carried in accordance with the equation $C_x = (E_{mess} / E_{kal}) C_{kal}$.

**22.** Use of the optical sensor according to any one of claims 1 to 18, for determination of the soot content and/or abraded metal in motor oils, for determination of impurities in exhaust gases of motor vehicles, for determination of particle concentrations in exhaust air or for determination of contaminants in waste waters.

**Revendications**

**1.** Capteur optique pour déterminer les concentrations en colorants et/ou en particules dans des milieux liquides ou gazeux, présentant au moins une tête de mesure composée d'une unité d'émission (2) comprenant au moins un élément d'émission à semi-conducteurs (9) qui émet des rayons lumineux d'émission (8) visibles et d'une unité de réception (3) comprenant au moins un élément de réception à semi-conducteurs (10) sur lequel est guidée une partie des rayons lumineux d'émission (8) qui traverse une section d'absorption avec un milieu liquide ou gazeux, l'élément d'émission à semi-conducteurs (9) émettant des rayons lumineux d'émission (8) dans la gamme de longueurs d'onde de 400 nm à 700 nm et dont la largeur de bande spectrale est inférieure à 100 nm, les têtes de mesure étant couplées par des lignes d'alimentation électriques (4, 4') à l'unité d'évaluation (6) dans laquelle les signaux de réception présents à la sortie de l'élément de réception à semi-conducteurs (10) peuvent être évalués pour déterminer la concentration en colorants et/ou la concentration en particules, **caractérisé en ce que** plusieurs têtes de mesure sont raccordés à une unité d'évaluation commune.

**2.** Capteur optique selon la revendication 1, **caractérisé en ce que** chaque tête de mesure est réalisée sous la forme d'un module capteur à immersion dont l'unité d'émission (2) et l'unité de réception (3) sont encapsulées de manière étanche aux liquides.

**3.** Capteur optique selon la revendication 2, **caractérisé en ce que** l'unité d'émission (2) et l'unité de réception (3) sont encapsulées dans des matériaux transparents au moins dans la zone des surfaces optiquement actives de l'élément d'émission à semi-conducteurs (9) et de l'élément de réception à semi-conducteurs (10).

**4.** Capteur optique selon la revendication 3, **caractérisé en ce que** les matériaux transparents sont formés de résines époxydes ou de polyméthacrylates, de verre, de téflon ou de polyoléfines.

**5.** Capteur optique selon l'une des revendications 2 à 4, **caractérisé en ce que** l'unité d'émission (2) et l'unité de réception (3) sont montés sur un support (13) commun pour définir la section d'absorption.

**6.** Capteur optique selon la revendication 5, **caractérisé en ce que** l'unité d'émission (2) et l'unité de réception (3) sont montés réglables en position sur le support (13).

**7.** Capteur optique selon la revendication 1, **caractérisé en ce que** la section d'absorption est formée par une cuvette recevant un milieu liquide ou gazeux, sur les côtés extérieurs de laquelle l'unité d'émission (2) et l'unité de réception (3) sont disposées.

**8.** Capteur optique selon la revendication 7, **caractérisé en ce que** la cuvette est réalisée sous la forme d'une cuvette à circulation.

**9.** Capteur optique selon l'une des revendications 1 à 8, **caractérisé en ce que** l'élément d'émission à semi-conducteurs (9) est formé par une diode électroluminescente ou une diode laser.

**10.** Capteur optique selon l'une des revendications 1 à 9, **caractérisé en ce que** l'élément d'émission à semi-conducteurs (9) est alimenté par une tension continue constante.

**11.** Capteur optique selon l'une des revendications 1 à 10, **caractérisé en ce que** l'élément de réception à semi-conducteurs (10) est formé par un phototransistor, une photodiode ou une photorésistance.

**12.** Capteur optique selon la revendication 11, **caractérisé en ce que** l'élément de réception à semi-conducteurs (10) est alimenté par une tension continue constante.

**13.** Capteur optique selon la revendication 12, **caractérisé en ce qu'**un stabilisateur de tension (15, 16) et une résistance série (17, 18) sont prévus pour stabiliser la tension continue respectivement pour l'élément d'émission à semi-conducteurs (9) et l'élément de réception à semi-conducteurs (10).

**14.** Capteur optique selon l'une des revendications 12 ou 13, **caractérisé en ce qu'**une thermistance est connectée à l'élément de réception à semi-conducteurs (10) pour la compensation de température des signaux de réception et/ou à l'élément d'émission à semi-conducteurs (9) pour la compensation de température des signaux d'émission.

**15.** Capteur optique selon l'une des revendications 12 à 14, **caractérisé en ce qu'**un module logiciel est prévu dans l'unité d'évaluation (6) pour la compensation de température des signaux de réception.

**16.** Capteur optique selon l'une des revendications 1 à 15, **caractérisé en ce que** l'unité d'évaluation (6) présente une unité d'affichage analogique ou numérique pour afficher les signaux de réception.

**17.** Capteur optique selon l'une des revendications 1 à 16, **caractérisé en ce que** l'unité d'évaluation (6) présente une unité de calcul (20) dans laquelle les signaux de réception sont lus par l'intermédiaire d'un convertisseur analogique/numérique (19).

**18.** Procédé permettant de faire fonctionner un capteur optique selon l'une des revendications 1 à 17, **caractérisé par** les étapes consistant à :

réaliser des mesures de référence pour éliminer la dépendance à la longueur d'onde des résultats de mesure du capteur optique à l'aide de milieux de référence ayant des concentrations en colorants ou des concentrations en particules connues disposés dans la section d'absorption pendant un processus d'étalonnage destiné à déterminer une valeur d'extinction de référence $E_{kal}$ spécifique au capteur et aux colorants et/ou aux particules, déterminer ensuite des valeurs d'extinction $E_{mess}$ formant des grandeurs de mesure réelles pour des milieux liquides ou gazeux disposés dans la section d'absorption,
et déterminer ensuite la concentration en colorants ou la concentration en particules dans le milieu liquide ou gazeux respectif par référencement de la valeur d'extinction mesurée $E_{mess}$ à la valeur d'extinction de référence $E_{kal}$.

**19.** Procédé selon la revendication 18, **caractérisé en ce que** la valeur d'extinction de référence est formée selon la relation $E_{kal} = \lg (I_0 / I_{kal})$, dans laquelle $I_0$ et $I_{kal}$ constituent les signaux de réception de l'élément de réception à semi-conducteurs (10) lorsqu'un milieu de référence exempt de colorants et/ou exempt de particules est disposé dans la section d'absorption et lorsque le milieu de référence ayant une concentration en colorants et/ou une concentration en particules prédéfinie $C_{kal}$ du colorant à déterminer et/ou des particules à déterminer est disposé dans la section d'absorption.

**20.** Procédé selon la revendication 19, **caractérisé en ce que** la valeur d'extinction $E_{mess}$ formant la grandeur de mesure réelle est formée selon la relation $E_{mess} = \lg (I_0 / I_{mess})$, dans laquelle $I_{mess}$ constitue le signal de réception de l'élément de réception à semi-conducteurs (10) lorsque le milieu liquide ou gazeux ayant la concentration en colorant $C_x$ à déterminer du colorant à déterminer et/ou des particules à déterminer est disposé dans la section d'absorption.

**21.** Procédé selon la revendication 20, **caractérisé en ce que** la détermination de la concentration en colorants et/ou de la concentration en particules $C_x$ est réalisée selon la relation $C_x = (E_{mess} / E_{kal}) C_{kal}$.

**22.** Utilisation du capteur optique selon l'une des revendications 1 à 18 pour déterminer la teneur en suie et/ou en particules métalliques d'huiles moteur, pour déterminer les impuretés dans les gaz d'échappement de véhicules automobiles, pour déterminer les concentrations en particules dans l'air d'échappement ou pour déterminer les impuretés dans les eaux usées.

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0114873 A1
- US 4699509 A
- JP 1119741 A
- US 3890510 A
- US 5402242 A

**In der Beschreibung aufgeführte Nicht-Patentliteratur**

- Theory of calibration for SenseAir IR gas sensors. *Technical Note TN-010,* Juli 2000, 1-3